# EUROPEAN PATENT APPLICATION

(11) **EP 4 560 670 A1**
(43) Date of publication of application: **28.05.2025**
(21) Application number: 24199493.8
(22) Date of filing: 10.09.2024
(51) Int. Cl.: H01H 1/42, H01H 31/00, H01H 31/28, H01H 33/12, H01H 33/24

(54) **THREE-POSITION SWITCH AND CORRESPONDING SWITCH CABINET**

(30) Priority: 24.11.2023 CN 202311603306
(71) Applicant: ABB Schweiz AG, 5400 Baden (CH)
(72) Inventor: ZHONG, Peng, Beijing, 100176 (CN); ZHANG, Baoyi, Beijing, 100085 (CN); WU, Hao, Beijing, 100079 (CN); HUANG, Pingan, Beijing, 102300 (CN)
(74) Representative: Zimmermann & Partner Patentanwälte mbB

(57) **Abstract**

Embodiments of the present disclosure relate to a three-position switch and a corresponding switch cabinet. The three-position switch generally comprises an isolation contact, a grounding contact and a moving contact. The moving contact comprises a first end and a second end. The first end is connected with a base, and the second end is opposite to the first end along a longitudinal extension direction of the moving contact and rotates around the first end along with the moving contact to switch among a closing position in which the second end contacts with the isolation contact, a grounding position in which the second end contacts with the grounding contact, and an opening position in which the second end disengages from both the isolation contact and the grounding contact. The second end is provided with a first protrusion and an arc-resistant component. The first protrusion protrudes from a main surface of the moving contact and is configured to contact the isolation contact when the second end is in the closing position. The arc-resistant component is disposed adjacent to the first protrusion and configured to withstand an arc when the first protrusion is close to the ground contact. According to the exemplary embodiment of the present disclosure, the consistency of the contact resistance before and after the experiment can be ensured by making corresponding changes to the moving contact.

## Description

### FIELD

Embodiments of the present disclosure generally relate to the field of switchgears, and specifically to a three-position switch and a corresponding switch cabinet.

### BACKGROUND

A three-position switch refers to a switchgear having a closing position, an opening position and a grounding position, which is widely applied in power systems. By switching among the three positions, the three-position switch can implement conversion of different states of the circuit. The three-position switch has the advantages of high safety and reliability, and the like.

However, in the existing three-position switch, switching the moving contact between the isolation contact and the grounding contact is implemented in the same contact area. In the case, after the grounding closing test is completed, the contact area of the moving contact is severely ablated. At this time, if the moving contact is switched to the isolation contact, the temperature rise test of the main circuit connected with the isolation contact often fails to meet the standard requirements. Therefore, there arises a need for a three-position switch improved in terms of temperature rise characteristics.

### SUMMARY

In order to at least partly solve the problem and/or other potential problems in the existing technology, example embodiments of the present disclosure provide a solution.

In a first aspect, there is provided a three-position switch. The three-position switch includes: an isolation contact; a grounding contact; and a moving contact, comprising: a first end connected with a base; a second end disposed opposite to the first end along a longitudinal extension direction of the moving contact and configured to rotate around the first end along with the moving contact to switch among a closing position in which the second end contacts with the isolation contact, a grounding position in which the second end contacts with the grounding contact, and an opening position in which the second end disengages from both the isolation contact and the grounding contact, wherein the second end is provided thereon with: a first protrusion protruding from a main surface of the moving contact and being configured to contact the isolation contact when the second end is in the closing position; and an arc-resistant component disposed adjacent to the first protrusion and configured to withstand an arc when the first protrusion is close to the ground contact.

According to the example embodiments of the present disclosure, with corresponding modifications to the moving contact, it can be ensured that the temperature rise test of the main circuit meets the standard requirements.

In some example embodiments, the arc-resistant component comprises a bulge portion protruding outwardly from the moving contact along a tangent line of a rotation direction of the moving contact, such that the moving contact is in an L shape, and the arc-resistant component is configured to contact the grounding contact when the second end is in the grounding position.

In some example embodiments, the grounding contact comprises a contact portion and an elastic portion disposed at a periphery of the contact portion, and a gap is formed between the contact portion and the elastic portion to receive the bulge portion of the moving contact, wherein the elastic portion is configured to press the bulge portion onto the contact portion when the bulge portion is inserted into the gap.

In some example embodiments, the arc-resistant component comprises a second protrusion protruding from the main surface of the moving contact and configured to contact the grounding contact when the second end is in the grounding position.

In some example embodiments, the first protrusion and the second protrusion are disposed in the longitudinal extension direction of the moving contact.

In some example embodiments, the grounding contact comprises: a first section fixedly connected with the base; a second section adjacent to the first section, a slot being formed between the first section and the second section; and a third section connecting the first section and the second section, such that the first section and the second section form a U shape, and wherein the grounding contact is configured such that, when the moving contact is the grounding position, the first protrusion is positioned in the slot and the second protrusion contacts the second section.

In some example embodiments, the grounding contact comprises: a contact base portion fixedly connected with the base; and a contact portion having a plate shape and extending from a middle part of the contact base portion, wherein the grounding contact is configured such that, when the moving contact is in the grounding position, the first protrusion does not contact the contact portion, and the second protrusion contacts the contact portion.

In some example embodiments, the arc-resistant component comprises an extension fixedly disposed at the second end and extending out of the moving contact, and the extension is configured to withstand an arc when the first protrusion is close to the grounding contact.

In some example embodiments, the arc-resistant component comprises a rotating body pivoted to a body of the moving contact through an arc-resistant pivot, and the rotating body is configured to withstand an arc when the first protrusion is close to the grounding contact.

In some example embodiments, the arc-resistant pivot further comprises a torsion spring connected to the rotating body, and the torsion spring is configured to be compressed when the moving contact is detaching from the grounding contact, and to rotate the rotating body under an elastic restoring force after the moving contact detaches from the grounding contact.

In some example embodiments, the arc-resistant component is formed by embedding an ablation-resistant material into the moving contact.

In some example embodiments, the three-position switch further comprises a voltage balancing cover that has an ellipsoidal or annular shape, and is disposed on the second end of the moving contact and/or the isolation contact.

In a second aspect, there is provided a switch cabinet. The switch cabinet includes the three-position switch as described in the first aspect.

### BRIEF DESCRIPTION OF THE DRAWINGS

The above and other objectives, features, and advantages of the present disclosure will become more apparent, through the following detailed description of the example embodiments with reference to the accompanying drawings where a plurality of embodiments of the present disclosure are depicted exemplarily, without limitation.
Fig. 1 is a perspective view of a schematic switch cabinet according to example embodiments of the present disclosure.
Fig. 2 is a main view of an example three-position switch according to a first example embodiment of the present disclosure.
Fig. 3 is a perspective view of a moving contact in the three-position switch in Fig. 2.
Fig 4 is a main view of a moving contact in the three-position switch in Fig. 2.
Fig. 5 is a perspective view of a grounding contact in the three-position switch in Fig. 2.
Fig. 6 is a main view of a schematic three-position switch according to a second example embodiment of the present disclosure.
Fig. 7 is a perspective view of a moving contact in the three-position switch in Fig. 6.
Fig. 8 is a main view of a moving contact in the three-position switch in Fig. 6.
Fig. 9 is a schematic diagram of an alternative embodiment of a grounding contact in the three-position switch in Fig. 6.
Fig. 10 is a main view of a schematic three-position switch according to a third example embodiment of the present disclosure.
Fig. 11 is a perspective view of a moving contact in the three-position switch in Fig. 10.
Fig. 12 is a main view of a moving contact in the three-position switch in Fig. 10.
Fig. 13 is a main view of a schematic three-position switch according to a fourth example embodiment of the present disclosure.
Fig. 14 is a perspective view of a moving contact in the three-position switch in Fig. 13.
Fig. 15 is a main view of a moving contact in the three-position switch in Fig. 13.

### DETAILED DESCRIPTION OF IMPLEMENTATIONS

Reference will now be made to the various example embodiments shown in the drawings to describe the principle of the present disclosure. It is to be understood that the description on those embodiments is provided merely to enable those skilled in the art to better understand and further implement the example embodiments disclosed herein, without suggesting any limitation to the scope of the present disclosure. It is to be noted that similar or same reference symbols are employed, if possible, throughout the drawings, where the similar or same reference symbols can represent similar or same functions. Those skilled in the art would easily realize that alternative embodiments of the structure and the method disclosed herein may be adopted according to the following description, without departing from the principle of the present disclosure.

As used herein, the terms "includes" and its variants are to be read as open terms that mean "includes, but is not limited to." The term "based on" is to be read as "based at least in part on." The terms "an embodiment" and "the embodiment" are to be read as "at least one example embodiment." The term "another embodiment" is to be read as "at least one another embodiment." The terms "first," "second," and the like may indicate the same or different objects. Other definitions, either explicit or implicit, may be included thereinafter. The definitions of the terms should be consistent throughout the specification unless indicated otherwise in the context.

As stated above, there is still some room for improvement to an existing three-position switch. The isolation switch and the grounding switch of the existing three-position switch use the same moving knife, and share a common contact area when closed. After the grounding closing test of the grounding switch is completed, the contact area of the moving knife is severely ablated. Further, when the isolation switch is closed, the contact resistance increases significantly, posing a serious challenge to the temperature rise test of the main circuit.

In order to address at least the above deficiency, example embodiments of the present disclosure provide an improved three-position switch and a corresponding switch cabinet. According to the example embodiments, with an optimized structure of the moving contact or the grounding contact, the temperature rise test of the main circuit of the three-position switch can meet the standard requirements.

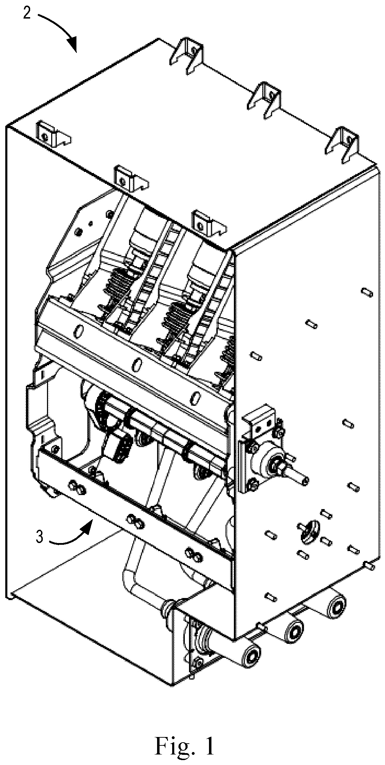

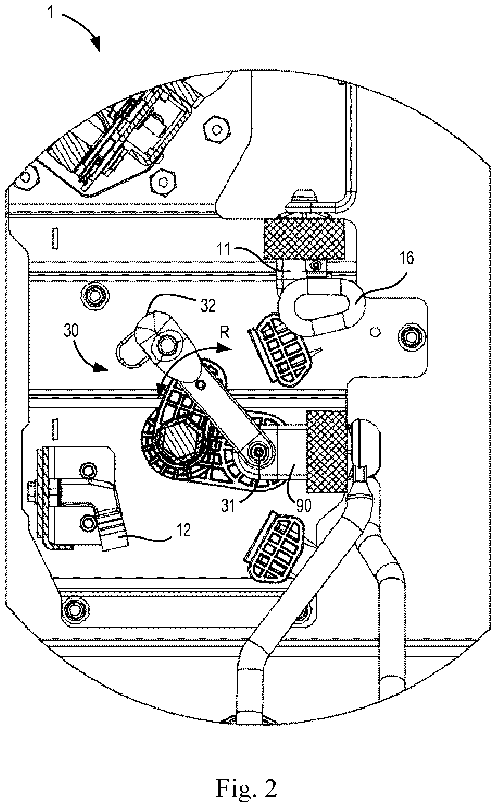

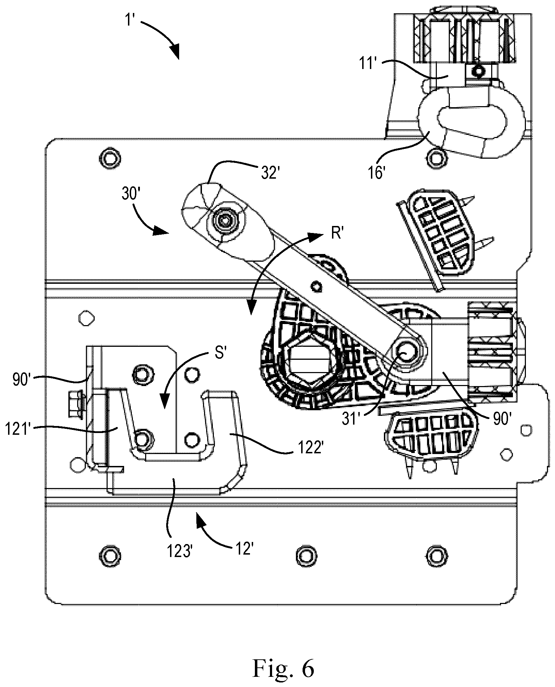

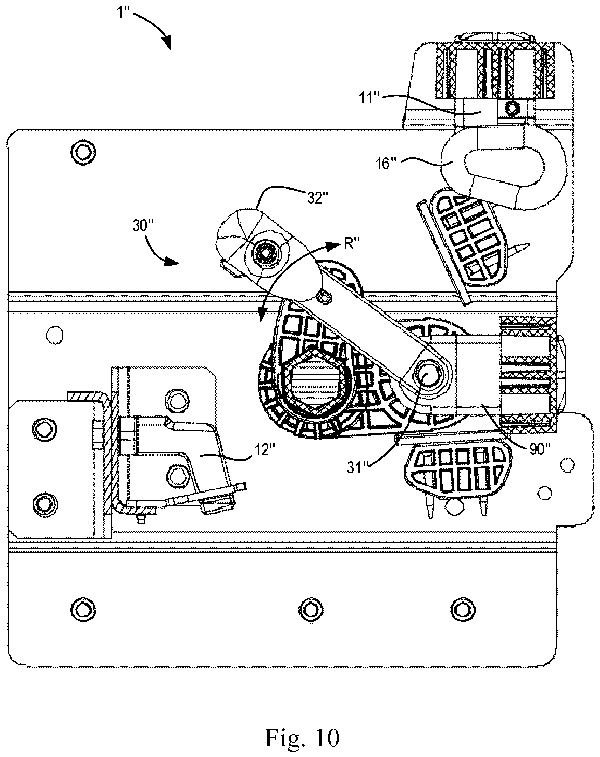

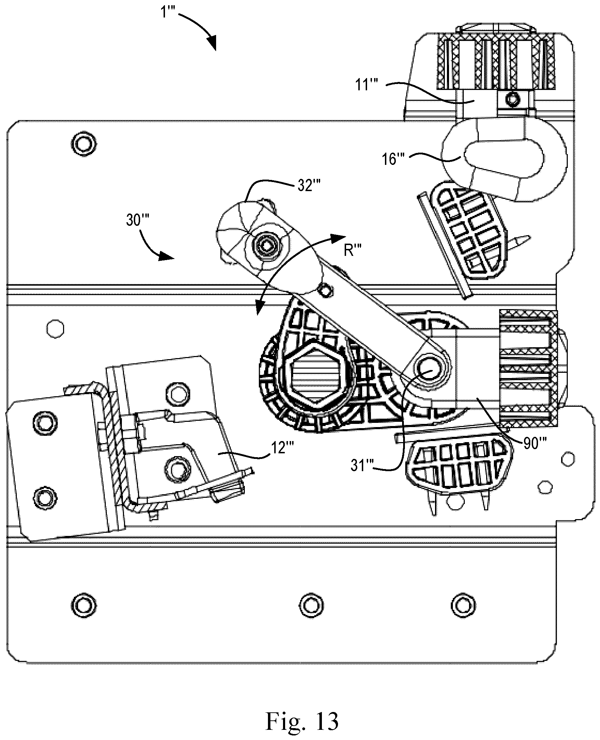

Reference will be made to Figs. 1-15 below to describe in detail the example embodiments, where: Fig. 1 is a perspective view of a switch cabinet 2 according to example embodiments of the present disclosure; Figs. 2-5 are respective views of a three-position switch 1 according to a first example embodiment of the present disclosure; Figs. 6-9 are respective views of a three-position switch 1' according to a second example embodiment of the present disclosure; Figs. 10-12 are respective views of a three-position switch 1" according to a third example embodiment of the present disclosure; and Figs. 13-15 are respective views of a three-position switch 1‴ according to a fourth example embodiment of the present disclosure.

As shown in Fig. 1, the switch cabinet 2 includes a three-position switch 3. The three-position switch 3 has integrated the functions of both an isolation switch and a grounding switch, and has a closing position, an opening position and a grounding position. The three-position switch 3 in Fig. 1 may be a three-position switch 1 in Figs. 2-5, or may be a three-position switch 1' in Figs. 6-9, or may be a three-position switch 1" in Figs. 10-12, or may be a three-position switch 1‴ in Figs. 13-15. Details will be provided hereinafter.

Reference now will be made to Figs. 2-5 to describe a three-position switch 1 according to a first example embodiment of the present disclosure. As shown, the three-position switch 1 generally includes an isolation contact 11, a grounding contact 12, which are fixedly disposed within the switch cabinet 2, and a moving contact 30 switchable between the isolation contact 11 and the grounding contact 12. The moving contact 30 may be formed by connecting two copper bars, and may be generally in the shape of a rod. This means that the moving contact 30 has an elongated shape, which has a significantly greater size in the longitudinal extension direction than sizes in two other dimensions. The moving contact 30 includes a first end 31 and a second end 32 disposed opposite to each other along the longitudinal extension direction. The first end 31 may be connected to a base 90 within a switch cabinet 2. The first end 31 may be provided with a pivot, thus allowing the moving contact 30 to pivot about the pivot of the first end 31 relative to the base 90 of the switch cabinet 2. As the result of the pivoting of the moving contact 30, the second end 32 can move back and forth between the isolation contact 11 and the grounding contact 12 along the rotation direction as indicated by the arrow R. When the second end 32 contacts the isolation contact 11, the three-position switch 1 is in the closing position. When the second end 32 contacts the grounding contact 12, the three-position switch 1 is in the grounding position. When the second end 32 contacts neither of the isolation contact 11 and the grounding contact 12 (i.e., the position as shown in Fig. 2), the three-position switch 1 is in the opening position. With the back and forth movement of the moving contact 30, the three-position switch 1 can be switched among the closing position, the grounding position and the opening position, to fulfil the function of the three-position switch 1.

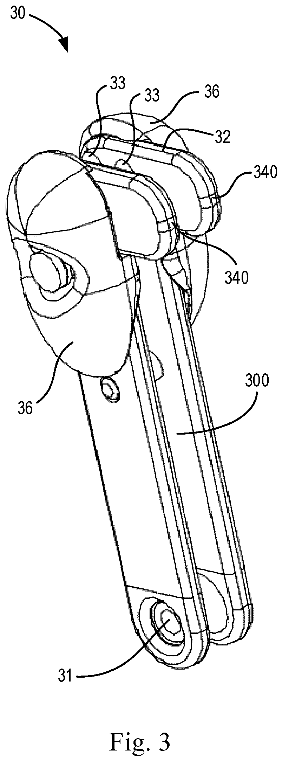

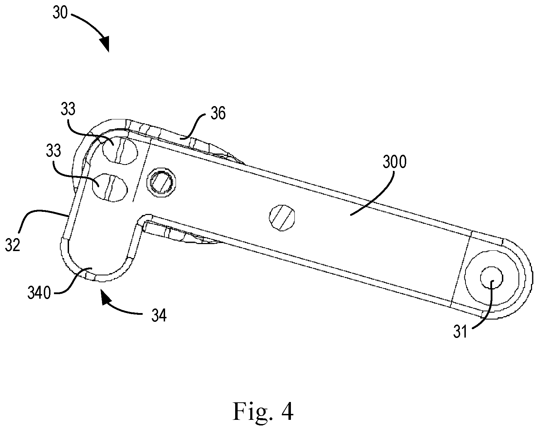

As shown in Figs. 3 and 4, the second end 32 is provided with a first protrusion 33. The first protrusion 33 may be a bump protruding from the main surface 300 of the moving contact 30 along a direction perpendicular to the main surface 300. The position of the first protrusion 33 may be arranged in such manner that: along with the rotation of the moving contact 30, the first protrusion 33 can contact the isolation contact 11 when the second end 32 is in the closing position, to implement an isolated, closing state.

The second end 32 is further provided with an arc-resistant component 34. As shown in Figs. 3 and 4, the arc-resistant component 34 may be a bulge proportion 340 protruding outwardly from the moving contact 30. The bulge proportion 340 protrudes outwardly substantially along a tangent line of the rotation direction of the moving contact 30. Therefore, as shown in Fig. 4, the moving contact 30 is substantially of an "L" shape. The bulge portion 340 is configured to contact the grounding contact 20 when the second end 32 is in the grounding position. In other words, for the first embodiment as shown in Figs. 2-5, the closing operation is implemented by causing the first protrusion 33 to contact the isolation contact 11; the grounding operation is implemented by causing the bulge portion 340 of the moving contact 30 to contact the grounding contact 12. In this way, the contact areas of the closing operation and the grounding operation are separated. Accordingly, during the grounding operation, only the bulge portion 340 is ablated while the first protrusion 33 for implementing the closing operation is completely free from the grounding operation, thus ensuring that the contact resistance is free from the isolated closing operation, to ensure that the temperature rise of the main circuit meets the standard requirements.

As shown in Figs. 3 and 4, the main surface 300 of the moving contact 30 may be provided with two first protrusions 33. It is to be understood that the number is provided only illustratively. Other numbers of the first protrusions 33 may be arranged on the moving contact 30, which could be adjusted according to the actual application environment and design needs, and those embodiments also fall into the scope of the present disclosure.

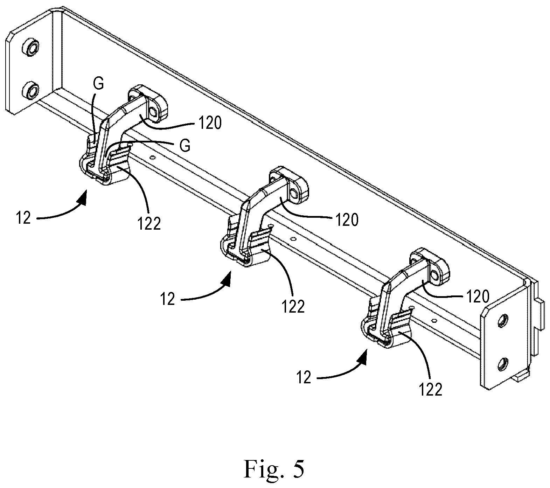

Fig. 5 is a perspective view of the grounding contact 12 of the three-position switch 1 according to the first example embodiment of the present disclosure. As shown, the grounding contact 12 includes a contact portion 120 and an elastic portion 122. The elastic portion 122 is substantially in Ω-shape and disposed adjacent to the contact portion 120. The elastic portion 122 is partly disposed at the periphery of the contact portion 120, and a gap G is formed between the elastic portion 122 and the contact portion 120 to receive the bulge portion 340 of the moving contact 30. The elastic portion 122 is formed of a material with a certain elasticity. During the grounding operation, the moving contact 30 rotates around the first end 31, and the bulge portion 340 of the moving contact 30 moves towards the grounding contact 12 and enters the gap G between the contact portion 120 and the elastic portion 122 of the grounding contact 12 to push the elastic portion 122 away from the contact portion 120. After the bulge portion 340 of the moving contact 30 fully enters the gap G, the elastic portion 122 can firmly press the bulge portion 340 of the moving contact 30 onto the contact portion 120 under the elastic restoring force, thus achieving a reliable electrical connection.

As shown in Fig. 3, the moving contact 30 further includes a voltage balancing cover 36 disposed on the second end 33 thereof. For example, in the embodiment as shown, the voltage balancing cover 36 may be ellipsoidal, which has a greater size in the longitudinal extension direction of the moving contact 30 than sizes in other directions, so as to match the outer profile of the moving contact 30. In other embodiments, the voltage balancing cover 36 may have an annular shape with a recess in the middle part. The voltage balancing cover 36 may be mounted on the moving contact 30 in any possible manner, for example, riveting, or the like. With the arrangement of the voltage balancing cover 36, a uniform field strength can be provided on the moving contact 30, to ensure the insulating performance.

As shown in Fig. 2, the isolation contact 11 may also be provided with a voltage balancing cover 16, which has a similar shape as the voltage balancing cover 36 of the moving contact 30 (details are omitted here). The specific shape of the voltage balancing cover 16 on the isolation contact 11 may be adapted according to the actual shape of the isolation contact 11, so as to match the outer profile of the isolation contact 11 and fit for the actual application scenario. With the arrangement of the voltage balancing cover 16, a uniform field strength can be provided on the isolation contact 11, thus ensuring the insulating performance.

Reference now will be made to Figs. 6-9 to describe a three-position switch 1' according to a second example embodiment of the present disclosure. Similar to the three-position switch described above according to the first example embodiment, the three-position switch 1' generally includes an isolation contact 11', a grounding contact 12', which are fixedly disposed within the switch cabinet 2, and a moving contact 30' switchable between the isolation contact 11' and the grounding contact 12'. The moving contact 30' at the second end 32' is also provided with a first protrusion 33' that contacts the isolation contact 11' when the second end 32' is in the closing position.

Different from the first example embodiment as shown in Figs. 2-5, the arc-resistant component 34' on the second end 32' is a second protrusion 340' disposed adjacent to the first protrusion 33', and the second protrusion 340' contacts the grounding contact 20' when the second end 32' is in the grounding position. The second protrusion 340' can protrude from the main surface 300' of the moving contact 30' along a direction substantially perpendicular to the main surface 300'. In other words, for the second embodiment as shown in Figs. 6-9, the closing operation is implemented by causing the first protrusion 33' to contact the isolation contact 11'; the grounding operation is implemented by causing the second protrusion 340' on the moving contact 30' to contact the grounding contact 12'. In this way, during the grounding operation, only the second protrusion 340' is ablated while the first protrusion 33' for implementing the closing operation is free from the grounding operation, thus ensuring that the temperature rise of the main circuit after the isolated closing operation meets the standard requirements.

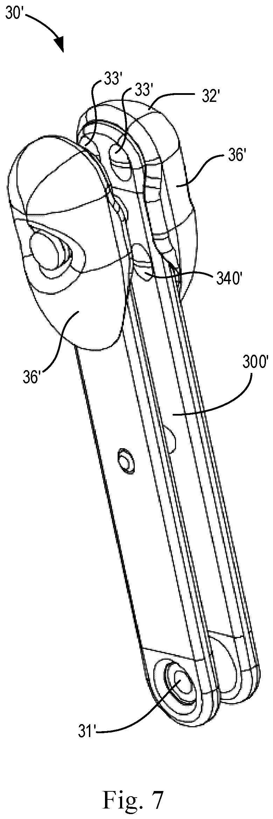

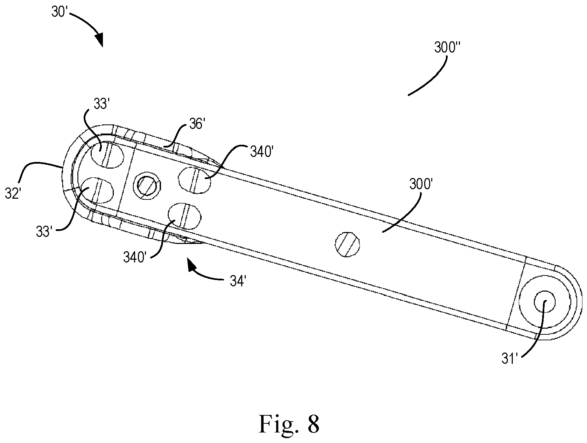

As shown in Figs. 7 and 8, the second protrusion 340' may be disposed opposite to the first protrusion 33', and arranged closer to the first end 31'. The second protrusion 340' may have the same or similar shape as the first protrusion 33'. Therefore, only the second protrusion 340' is provided, without changing the basic shape of the moving contact 30'. In other words, in the second embodiment, as shown in Fig. 8, the basic shape of the moving contact 30' is a simple rod-like shape. Only with a minor change to the moving contact 30', the desired temperature rising effect can be achieved. In the case requiring a compact spatial layout, such a minor change to the moving contact 30' will not cause a redesign of other related components, and therefore has a great advantage in terms of costs.

In addition, since the moving contact 30' still remains a relatively simple shape, not having too many chamfered structures, such a smooth structure can ensure good insulation performance. In particular, in an air insulation scenario, this structure is more advantageous in insulation performance. Moreover, as shown in Fig. 8, the first protrusion 33' and the second protrusion 340' are disposed in the longitudinal extension direction of the moving contact 30'. It is to be understood that, since the gap between the two first protrusions 33' and the gap between the two second protrusions 340' are much smaller than the longitudinal size of the moving contact 30', it could be considered that the two first protrusions 33' and the two second protrusions 340' have a small distance away from the longitudinal axis of the moving contact 30', respectively. Due to the rod-like shape of the moving contact 30', the switching between the isolation contact 11' and the grounding contact 12' can be achieved by providing only one knife (i.e., a second end 32'). As compared with the case of using a plurality of knives, the moving contact 30' is subjected to a more concentrated force during movement, to make the mechanical performance of the moving contact 30' better and implement a more reliable and more stable working process.

In the second embodiment, various methods could be envisioned to implement the electrical function of the grounding contact 12'. Returning to Fig. 6, a schematic structure of the grounding contact 12' according to the second embodiment will be described in detail hereinafter. As shown, the grounding contact 12' is generally in a "U" shape and specifically includes: a first section 121' fixedly connected with the base 90' on the switch cabinet, a second section 122' adjacent to the first section 121', and a third section 123' connected with the first section 121' and the second section 122'. A slot S' is formed between the first section 121' and the second section 122'. When the moving contact 30' is rotating counterclockwise along the direction as shown in Fig. 6 and closing to the grounding contact 12', in conjunction with Fig. 8, the second protrusion 340' on the moving contact 30 is connected with the second section 122' of the grounding contact 12', to achieve a connection between the moving contact 30' and the grounding contact 12'. Meanwhile, the first protrusion 33' falls into the slot S' between the first section 121' and the second section 122', not contacting the grounding contact 12'. In this way, during the grounding operation, only the second protrusion 340' on the moving contact 30' contacts the grounding contact 12'.

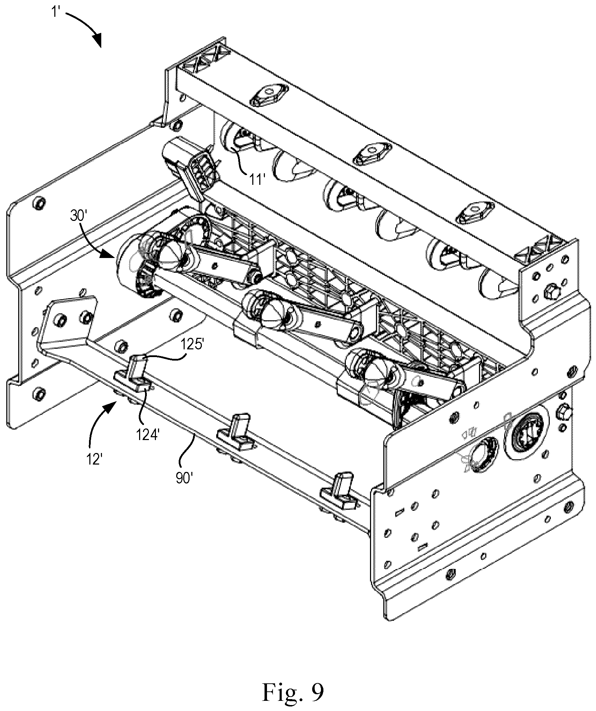

Referring to Fig. 9, a further schematic structure of the grounding contact 12' according to the second embodiment will be detailed hereinafter. As shown, the grounding contact 12' generally includes a contact base portion 124', and a contact portion 125' extending out of the middle part of the contact base portion 124'. The contact base portion 124' is fixedly connected with the base 90', the contact portion 125' has a plate shape, and the contact portion 125' and the contact base portion 124' are generally presented in a T shape. The grounding contact 12' may be properly disposed on the base 90', to prevent the first protrusion 33' on the moving contact 30' from contacting the contact portion 125'. In conjunction with Fig. 8, when the moving contact 30' is rotating and closing to the grounding contact 12', the first protrusion 33' on the moving contact 30' can bypass the contact portion 125' of the grounding contact 12', not contacting the latter, but the second protrusion 340' on the moving contact 30' can contact the contacting portion 125' of the grounding contact 12'. In this way, during the grounding operation, only the second protrusion 340' on the moving contact 30' contacts the grounding contact 12'.

It is to be understood that Figs. 6 and 9 only show two possible forms of the grounding contact 12', and those skilled in the art would conceive of other forms of the grounding contact 12' according to the actual application scenario.

As shown in Fig. 7, the moving contact 30' further includes a voltage balancing cover 36' on the second end 33' thereof. For example, in the embodiment as shown, the voltage balancing cover 36' may be ellipsoidal, which has a greater size in the longitudinal extension direction of the moving contact 30' than sizes in other directions, so as to match the outer profile of the moving contact 30'. In other embodiments, the voltage balancing cover 36' may have an annular shape with a recess in the middle part. The voltage balancing cover 36' may be mounted on the moving contact 30' in any possible manner, for example, riveting, or the like. With the arrangement of the voltage balancing cover 36', a uniform field strength can be provided on the moving contact 30', to ensure the insulation performance.

As shown in Fig. 6, the isolation contact 11 may also be provided with a voltage balancing cover 16', which has a similar shape as the voltage balancing cover 36' of the moving contact 30' (details are omitted here). The specific shape of the voltage balancing cover 16' on the isolation contact 11' may be adapted according to the actual shape of the isolation contact 11', so as to match the outer profile of the isolation contact 11' and fit for the actual application scenario. With the arrangement of the voltage balancing cover 16', a uniform field strength can be provided on the isolation contact 11', to ensure the insulating performance.

According to the first example embodiment and the second example embodiment of the present disclosure, an arc-resistant component 34 (which is the bulge portion 340 in the first example embodiment or the second protrusion 340' in the second example embodiment) independent of the first protrusion 33, 33' is provided to withstand an arc, and the respective arc-resistant component is configured to contact the grounding contact 12, 12' during the grounding operation, to differentiate the area for the grounding operation (i.e., the arc-resistant component 34, which is the bulge portion 340 in the first example embodiment or the second protrusion 340' in the second example embodiment) from the area for the isolating operation (i.e., the first protrusion 33, 33'). In the case, the ablation of the contact area during the ground operation do not increase the contact resistance during the isolated closing operation.

Hereinafter, reference will be made to Figs. 10-12 to describe a three-position switch 1" according to a third example embodiment of the present disclosure. Similar to the three-position switches described above according to the first example embodiment and the second example embodiment, the three-position switch 1" generally includes an isolation contact 11", a grounding contact 12", which are fixedly disposed within the switch cabinet 2, and a moving contact 30" switchable between the isolation contact 11" and the grounding contact 12". The moving contact 30" at the second end 32" is also provided with a first protrusion 33" that contacts the isolation contact 11" when the second end 32" is in the closing position.

The moving contact 30" at the second end 32" is provided with an arc-resistant component 34". The arc-resistant component 34" is fixedly disposed on the second end 32". The arc-resistant component 34" plays the role of arcing earlier than the first protrusion 33" during the grounding operation, to withstand the arc and thus reduce the ablation of the first protrusion 33" by the arc generated during the grounding operation. Different from the first example embodiment and the second example embodiment, , the first protrusion 33" of the third embodiment as shown in Figs. 10-12 is not only used together with the isolation contact 11" to implement the closing operation, but also used together with the grounding contact 12" to implement the grounding operation. For the third embodiment, although the closing operation and the grounding operation are implemented by causing the first protrusion 33" to respectively contact the corresponding isolation contact 11" and the grounding contact 12", the negative effect of the arc on the first protrusion 33" during the grounding operation can be reduced due to the presence of the arc-resistant component 34". With a special arc-resistant component 34", it can be guaranteed that the temperature rise of the main circuit meets the standard requirements after the isolated closing operation is implemented.

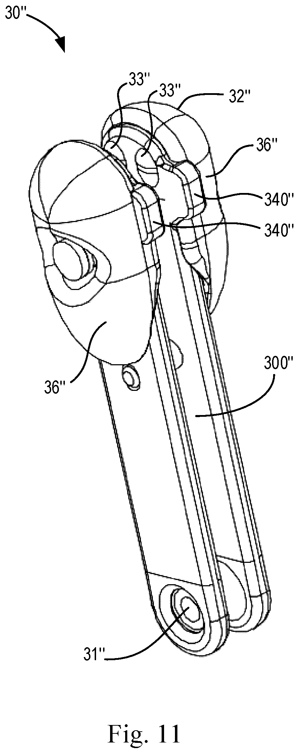

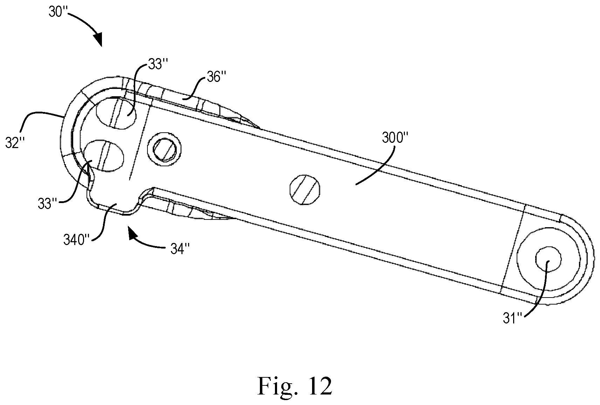

In the embodiment as shown in Figs. 11 and 12, the arc-resistant component 34" may be an extension 340" extending out of the moving contact 30". In some other embodiments, an ablation-resistant material is embedded into the moving contact 30" to achieve the effect of the arc-resistant component 34". In further embodiments, the ablation-resistant material may be a copper-chromium alloy. The material listed here is provided only as an example, without suggesting any limitation. The ablation-resistant material may be other materials, which are not specifically limited by the embodiment of the present disclosure.

As shown in Fig. 11, the moving contact 30" further includes a voltage balancing cover 36" disposed on the second end 33" thereof. For example, in the embodiment as shown, the voltage balancing cover 36" may be ellipsoidal, which has a greater size in the longitudinal extension direction of the moving contact 30" than sizes in other directions, so as to match the outer profile of the moving contact 30". In other embodiments, the voltage balancing cover 36" may have an annular shape with a recess in the middle part. The voltage balancing cover 36" may be mounted on the moving contact 30" in any possible manner, for example, riveting, or the like. With the arrangement of the voltage balancing cover 36", a uniform field strength can be provided on the moving contact 30", to ensure the insulating performance.

As shown in Fig. 10, the isolation contact 11" may also be provided with a voltage balancing cover 16", which has a similar shape as the voltage balancing cover 36" of the moving contact 30" (details are omitted here). The specific shape of the voltage balancing cover 16" on the isolation contact 11" may be adapted according to the actual shape of the isolation contact 11", so as to match the outer profile of the isolation contact 11" and fit for the actual application scenario. With the arrangement of the voltage balancing cover 16", a uniform field strength can be provided on the isolation contact 11", thus ensuring the insulating performance.

Hereinafter, reference will be made to Figs. 13-15 to describe a three-position switch 1‴ according to a fourth example embodiment of the present disclosure. Similar to the three-position switches described above according to the first through the third example embodiment, the three-position switch 1‴ generally includes an isolation contact 11‴, a grounding contact 12'", which are fixedly disposed within the switch cabinet 2, and a moving contact 30'" switchable between the isolation contact 11‴ and the grounding contact 12'". The moving contact 30'" at the second end 32'" is also provided with a first protrusion (not shown) that contacts the isolation contact 11‴ when the second end 32'" is in the closing position.

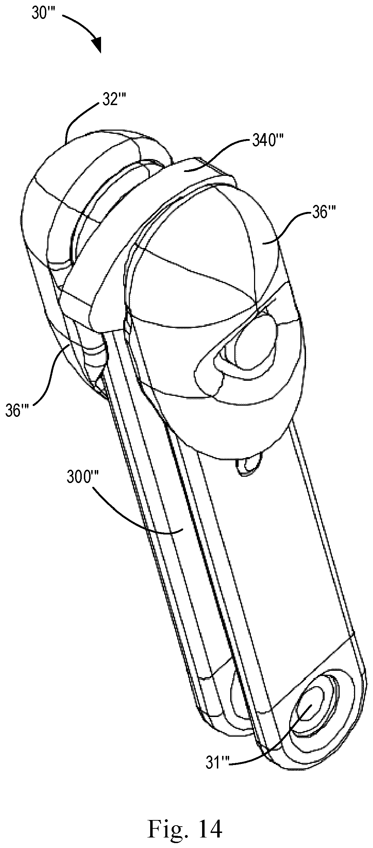

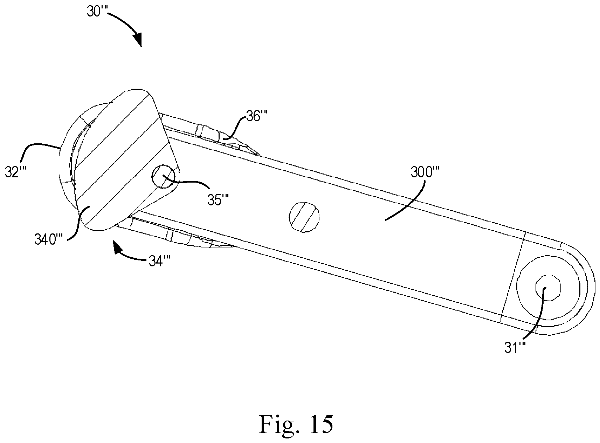

As shown in Figs. 14 and 15, the moving contact 30'" is provided with an arc-resistant component 34'" at the second end 32'". Similar to the arc-resistant component in the third example embodiment as shown in Figs. 10-12, the arc-resistant component 34'" plays the role of arcing earlier than the first protrusion 33‴ during the grounding operation, to withstand the arc and thus reduce the ablation of the first protrusion 33" by the arc generated during the grounding operation. A further similarity with the third embodiment as shown in Figs. 10-12 lies in that: for the third embodiment as shown in Figs. 13-15, the first protrusion 33'" is not only used together with the isolation contact 11‴ to implement the closing operation, but also used together with the grounding contact 12'" to implement the grounding operation. For the fourth embodiment, although the closing operation and the grounding operation are implemented by causing the first protrusion 33‴ to respectively contact the corresponding isolation contact 11‴ and the grounding contact 12'", the negative effect of the arc on the first protrusion 33'" during the grounding operation can be reduced due to the presence of the arc-resistant component 34'". With a special arc-resistant component 34''', it can be guaranteed that the temperature rise of the main circuit meets the standard requirements after the isolated closing operation is implemented.

However, different from the third example embodiment as shown in Figs. 10-12, the arc-resistant component as shown in Figs. 13-15 is a rotating body 340'" pivoted to the body of the moving contact 30'" through an arc-resistant pivot 35'". The rotating body 340'" can rotate about the arc-resistant pivot 35'", and the arc-resistant pivot 35'" may be provided thereon with a torsion spring (not shown), to cooperate with the rotation of the rotating body 340'". Specifically, during the grounding operation, the moving contact 30'" rotates towards the grounding contact 12'", and the rotating body 340'" initially arcs. With the continuous rotation of the moving contact 30'", during the grounding closing process, the rotating body 340'" swings around the arc-resistant pivot 35" and compresses the torsion spring mounted to the arc-resistant pivot 35", which does not affect the contact between the first protrusion 33‴ and the grounding contact 12'". After the moving contact 30'" detaches from the contact with the grounding contact 12'", the torsion spring can be reset under the elastic action and return to its initiate state.

As shown in Fig. 14, the moving contact 30'" further includes a voltage balancing cover 36'" disposed on the second end 33'" thereof. For example, in the embodiment as shown, the voltage balancing cover 36'" may be ellipsoidal, which has a greater size in the longitudinal extension direction of the moving contact 30'" than sizes in other directions, so as to match the outer profile of the moving contact 30'". In other embodiments, the voltage balancing cover 36'" may have an annular shape with a recess in the middle part. The voltage balancing cover 36'" may be mounted on the moving contact 30'" in any possible manner, for example, riveting, or the like. With the arrangement of the voltage balancing cover 36'", a uniform field strength can be provided on the moving contact 30'", to ensure the insulating performance.

As shown in Fig. 13, the isolation contact 11‴ may also be provided thereon with a voltage balancing cover 16'", which has a similar shape as the voltage balancing cover 36" of the moving contact 30'" (details are omitted here). The specific shape of the voltage balancing cover 16'" on the isolation contact 11‴ may be adapted according to the actual shape of the isolation contact 11‴, so as to match the outer profile of the isolation contact 11‴ and fit for the actual application scenario. With the arrangement of the voltage balancing cover 16'", a uniform field strength can be provided on the isolation contact 11‴, thus ensuring the insulating performance.

According to the third example embodiment and the fourth example embodiment of the present disclosure, a special arc-resistant component 34 (which is the extension 340" in the third example embodiment or the rotating body 340‴ in the fourth example embodiment) independent of the first protrusion 33", 33'" is provided to withstand arc. During the grounding operation, the corresponding arc-resistant component 34 first contacts the grounding contact 12", 12'", such that the position of the initial arcing point is on the corresponding arc-resistant component 34, and the arcing ablation area is thus mainly concentrated on the arc-resistant component 34. In the case, the ablation of the first protrusion 33', 33‴ during the grounding operation is reduced, which does not increase the contact resistance during the isolated closing operation.

According to the various embodiments of the present disclosure, with the corresponding modifications to the moving contact and the grounding contact, it can be ensured that the temperature rise test of the main circuit meets the standard requirements.
The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A three-position switch, comprising:
an isolation contact;
a grounding contact; and
a moving contact, comprising:
a first end connected with a base;
a second end disposed opposite to the first end along a longitudinal extension direction of the moving contact and configured to rotate around the first end along with the moving contact to switch among a closing position in which the second end contacts with the isolation contact, a grounding position in which the second end contacts with the grounding contact, and an opening position in which the second end disengages from both the isolation contact and the grounding contact, wherein the second end is provided thereon with:
a first protrusion protruding from a main surface of the moving contact and being configured to contact the isolation contact when the second end is in the closing position; and
an arc-resistant component disposed adjacent to the first protrusion and configured to withstand an arc when the first protrusion is close to the ground contact.

2. The three-position switch of claim 1, wherein the arc-resistant component comprises a bulge portion protruding outwardly from the moving contact along a tangent line of a rotation direction of the moving contact, such that the moving contact is in an L shape, and the arc-resistant component is configured to contact the grounding contact when the second end is in the grounding position.

3. The three-position switch of claim 2, wherein the grounding contact comprises a contact portion and an elastic portion disposed at a periphery of the contact portion, and a gap is formed between the contact portion and the elastic portion to receive the bulge portion of the moving contact, wherein the elastic portion is configured to press the bulge portion onto the contact portion when the bulge portion is inserted into the gap.

4. The three-position switch of any of the preceding claims, wherein the arc-resistant component comprises a second protrusion protruding from the main surface of the moving contact and configured to contact the grounding contact when the second end is in the grounding position.

5. The three-position switch of claim 4, wherein the first protrusion and the second protrusion are disposed in the longitudinal extension direction of the moving contact.

6. The three-position switch of claim 4 or 5, wherein the grounding contact comprises:
a first section fixedly connected with the base;
a second section adjacent to the first section, a slot being formed between the first section and the second section; and
a third section connecting the first section and the second section, such that the first section and the second section form a U shape, and
wherein the grounding contact is configured such that, when the moving contact is the grounding position, the first protrusion is positioned in the slot and the second protrusion contacts the second section.

7. The three-position switch of claim 4 or 5, wherein the grounding contact comprises:
a contact base portion fixedly connected with the base; and
a contact portion having a plate shape and extending from a middle part of the contact base portion, and
wherein the grounding contact is configured such that, when the moving contact is in the grounding position, the first protrusion does not contact the contact portion and the second protrusion contacts the contact portion.

8. The three-position switch of any of the preceding claims, wherein the arc-resistant component comprises an extension fixedly disposed at the second end and extending out of the moving contact, and the extension is configured to withstand an arc when the first protrusion is close to the grounding contact.

9. The three-position switch of any of the preceding claims, wherein the arc-resistant component comprises a rotating body pivoted to a body of the moving contact through an arc-resistant pivot, and the rotating body is configured to withstand an arc when the first protrusion is close to the grounding contact.

10. The three-position switch of claim 9, wherein the arc-resistant pivot further comprises a torsion spring connected to the rotating body, and the torsion spring is configured to be compressed when the moving contact is detaching from the grounding contact, and to rotate the rotating body under an elastic restoring force after the moving contact detaches from the grounding contact.

11. The three-position switch of any of the preceding claims, wherein the arc-resistant component is formed by embedding an ablation-resistant material into the moving contact.

12. The three-position switch of any of the preceding claims, further comprising a voltage balancing cover that has an ellipsoidal or annular shape and is disposed on the second end of the moving contact and/or the isolation contact.

13. A switch cabinet, comprising the three-position switch of any of claims 1-12.
